# FASCICULE DE BREVET EUROPEEN

(11) **EP 0 983 339 B1**
(45) Date de publication et mention de la délivrance du brevet: **28.05.2003**
(21) Numéro de dépôt: 99910416.9
(22) Date de dépôt: 19.03.1999
(51) Int. Cl.: C12G 3/04

(54) **NOUVELLE BOISSON EVENTUELLEMENT ALCOOLISEE LIMPIDE CONTENANT DE L'ANETHOLE ET BOISSON DILUEE TROUBLE OBTENUE PAR DILUTION**
NEUES ANETHANOL ENTHALTEND KLARES GEGEBENFALLS ALKOHOLISCHES GETRÄNK UND TRÜBES VERDÜNNTES GETRÄNK HERGESTELLT DURCH VERDÜNNUNG
NOVEL CLEAR BEVERAGE OPTIONALLY ALCOHOLIC CONTAINING ANETHOL AND CLOUDY DILUTED BEVERAGE OBTAINED BY DILUTION

(30) Priorité: 23.03.1998 FR 9803534
(43) Date de publication de la demande: 08.03.2000
(73) Titulaire: PERNOD-RICARD, 75008 Paris (FR)
(72) Inventeur: FALCONNIER, Brigitte, F-77166 Grisy-Suisnes (FR)
(74) Mandataire: Warcoin, Jacques
(86) Numéro de dépôt international: FR9900641
(87) Numéro de publication internationale: WO99049012

(56) Documents cités:
- EP-A- 0 100 459
- EP-A- 0 139 545
- EP-A- 0 604 806
- FR-A- 2 638 761
- PATENT ABSTRACTS OF JAPAN vol. 012, no. 148 (C-493), 7 mai 1988 (1988-05-07) & JP 62 265236 A (KAO CORP), 18 novembre 1987 (1987-11-18)

## Description

La présente invention concerne des boissons éventuellement alcoolisées limpides contenant de l'anéthole, destinées à être diluées en provoquant un trouble. L'invention concerne plus particulièrement les spiritueux anisés à bas degré alcoolique.

Les pastis sont des boissons apéritives constituées par une solution limpide d'anéthole dans l'éthanol. Les pastis les plus courants correspondent à des solutions à 2 g/l d'anéthole dans de l'éthanol à 45 % en v/v.

Les consommateurs souhaitent pouvoir disposer de boissons de ce type à base d'anéthole mais dont la teneur en alcool serait inférieure à 45%, par exemple des boissons contenant seulement 20 % d'alcool.

Pour des raisons touchant aux qualités organoleptiques de la boisson, il n'est pas possible de diminuer trop la concentration en anéthole qui doit rester voisine de 2 g/l. Dans ces conditions, il n'est pas possible de dissoudre 2 g/l d'anéthole dans l'alcool à 20 %, il se produit immédiatement un trouble, ce qui n'est pas acceptable commercialement pour ce type de produit. En outre, il faut tenir compte du fait que les boissons anisées, si elles doivent être limpides en bouteille, doivent se troubler par ajout d'eau, c'est-à-dire par dilution avec environ 5 volumes d'eau.

En effet, compte tenu de la courbe de solubilisation de l'anéthole en fonction du degré alcoolique (figure annexée, à 20°C), il apparaît impossible de solubiliser plus d'environ 200 mg d'anéthole/l dans 20 % d'alcool et plus de 400 mg/l dans 30 %. Au-dessus du seuil de solubilité, l'anéthole se trouve partiellement sous forme insoluble (gouttelettes huileuses) et donne un aspect trouble/laiteux au mélange.

La demande de brevet FR-A-2 638 761 décrit une composition éthanolique limpide contenant de l'anéthole, caractérisée en ce qu'elle est constituée d'au moins un milieu hydroéthanolique contenant de 10 à 30 % d'éthanol v/v et 1 à 3 g/l d'anéthole et, en outre, d'une quantité efficace pour maintenir la composition limpide d'un agent tensio-actif ou d'un mélange d'agents tensio-actifs neutres de formule R-O-(CH₂-CH₂-O)ₙH ayant les caractéristiques suivantes :
- il est acceptable dans l'alimentation humaine,
- son HLB est 12 < HLB < 15,
- la CMC est 10⁻¹ > CMC >10⁻³
le point de trouble étant supérieur à 30°C pour un agent tensio-actif non ionique et la température de Krafft étant inférieure à 10°C pour un agent tensio-actif ionique.

L'objet de la présente invention est de proposer une nouvelle boisson présentant des propriétés similaires ou avantageuses par rapport à celle décrite dans la demande de brevet FR-A-2 638 761.

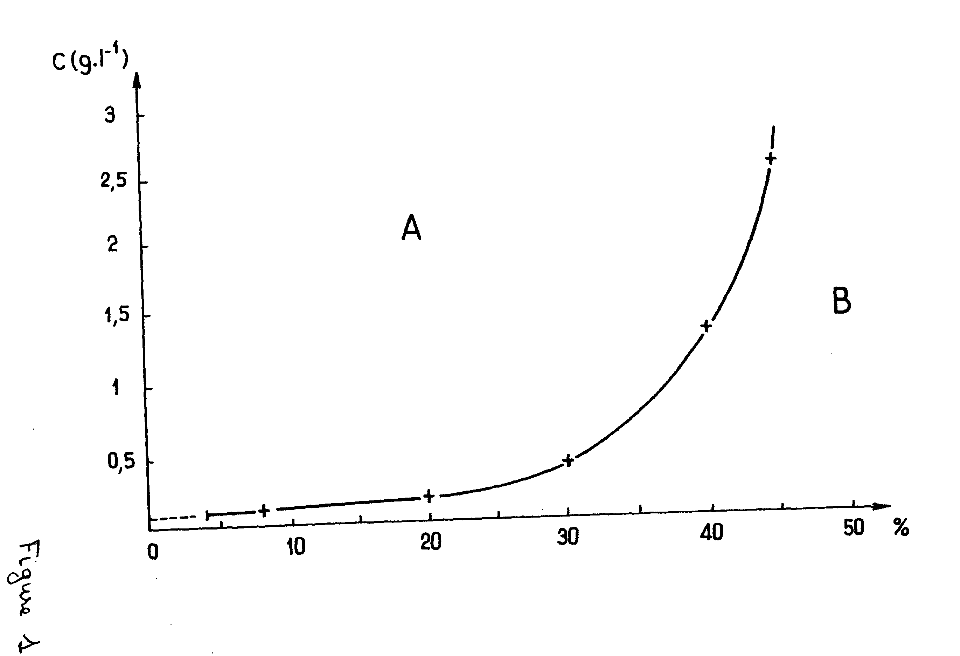

Un autre objet de la présente invention est de proposer une boisson limpide dont le seuil de solubilité est supérieur pour un volume d'alcool donné à celui indiqué sur la courbe annexée à la figure unique.

Un autre objet de la présente invention est de proposer une boisson stable dans le temps.

Un autre objet de la présente invention est de proposer une boisson qui se trouble lorsqu'elle est diluée avec de l'eau et ceci en fonction de sa composition.

L'invention concerne donc en premier lieu une boisson éventuellement alcoolisée contenant de l'anéthole, caractérisée en ce qu'elle comprend une quantité efficace d'au moins un phospholipide, acceptable en alimentation humaine, pour améliorer la solubilité de l'anéthole dans ladite boisson.

Par quantité « efficace », on entend une quantité suffisante pour diminuer la turbidité des boissons éventuellement faiblement alcoolisées contenant de l'anéthole.

L'invention concerne en particulier les boissons non alcoolisées ou faiblement alcoolisées.

Par boisson non alcoolisée, on entend selon la législation une boisson dont la teneur en alcool est inférieure à 1,2 %.

Par faiblement « alcoolisées », on entend des boissons dont le degré d'alcool est inférieur à 400 g/l notamment inférieur à 300 g/l.

Parmi ces phospholipides, on cite les phospholipides contenus dans les lécithines ou dérivés, notamment les lysolécithines, d'origine végétale ou animale. Ces phospholipides peuvent se présenter sous forme pure, sous forme de mélange. On cite également les lécithines qui sont un mélange complexe de phosphatides constitués principalement d'acide phosphatidique, de phosphatidylcholine, phosphatidyléthanolamine, phosphatidylsérine, lysophosphatidylcholine et phosphatidylinositol associés à des quantités variables d'autres substances telles que triglycérides, glycolipides, sphingolipides, acides gras et les carbohydrates.

On pourra donc choisir soit les phospholipides mentionnés ci-dessus, soit les lécithines contenant ces phospholipides.

Parmi les lécithines, on cite celles d'origine végétale ou animale (extraits de soja, d'oeufs).

Parmi celles-ci, on cite des lécithines présentant des caractéristiques chimiques très variables : des lécithines brutes comme Epikuron 145® des fractions enrichies en phosphatidylcholine comme Epikuron 200®, Ovothin 180 ou Phospholipon 80® des lécithines modifiées enzymatiquement comme Epikuron 200 E® et Sternpur®.

La concentration du ou des phospholipides, en particulier de la ou des lécithines est fonction du type de phospholipides choisis et des teneurs en alcool et en anéthole de la boisson.

Les phospholipides selon une variante répondent à la formule indiquée ci-après : 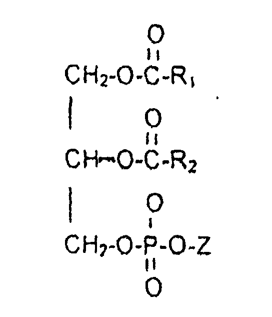 dans laquelle :
R₁, R₂ identiques ou différents sont des restes d'acides gras en C₁₄-C₂₂
Z est l'atome d'hydrogène, un radical 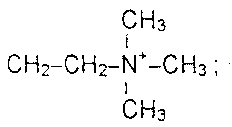 CH₂-CH₂-NH₂,

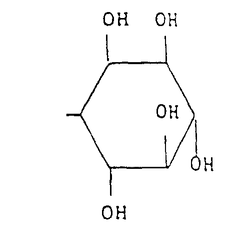

Comme ceci a déjà été exposé, une des caractéristiques de l'invention est de permettre d'obtenir des boissons anisées faiblement alcoolisées limpides. Par exemple, la turbidité est notamment inférieure à 100 NTU.

Dans une boisson contenant éventuellement une faible quantité d'alcool et une quantité d'anéthole supérieure au seuil de solubilité (cas des compositions comprises dans la zone A de la courbe annexée), l'anéthole se trouve sous forme insoluble (gouttelettes huileuses) et donne un aspect trouble/laiteux au mélange. Dans la zone B, la boisson est limpide.

La limpidité de la boisson selon l'invention vient du fait qu'elle se trouve sous la forme d'une émulsion submicronique ou microémulsion composée de nanosomes dont le diamètre moyen est inférieur à 100 nm, du type phase anéthole-phospholipide dans phase aqueuse, éventuellement alcoolisée.

Une micro-émulsion est une émulsion dont la taille des particules est si faible (notamment < 100 nm) que celles-ci apparaissent imperceptibles à l'oeil : on observe une phase limpide, comparable à une solution vraie, mais étant constituée d'une émulsion.

La production d'une micro-émulsion par un ou plusieurs surfactants appropriés permet ainsi d'augmenter la solubilité apparente de l'anéthole à des pourcentages d'alcool limités.

En d'autres termes, les émulsifiants permettent de disperser l'huile essentielle très finement jusqu'à l'obtention d'une solubilité dite « apparente » (gouttelettes d'huile insolubles, invisibles à l'échelle de l'oeil humain).

Les teneurs en anéthole considérées sont en général comprises entre 0,2 et 10 g/l et de préférence 0,5 à 2 g/l, tandis que la concentration en phospholipides sera avantageusement comprise entre 0,4 et 30 g/l. La quantité de tensio-actifs augmentera avec la concentration d'anéthole. De ce fait, de préférence, le rapport en poids entre le phospholipide et l'anéthoie est compris entre 0,5 et 10.

La boisson selon l'invention comprend de préférence entre 8 à 400 g/l d'éthanol, de préférence elle est faiblement alcoolisée entre 40 et 300 g/l d'éthanol.

En vue d'une bonne qualité (finesse de l'émulsion) et d'une bonne stabilité, tous les composants de la formule doivent être le moins minéralisés possible et notamment les plus pauvres en cations divalents.

Dans certains cas, une limpidité parfaite n'est obtenue qu'après avoir soumis l'émulsion à un traitement mécanique approprié. Ce traitement a pour fonction de réduire la taille des gouttelettes de l'émulsion et ainsi d'augmenter la limpidité et la stabilité physico-chimique. Différents traitements apparaissent satisfaisants. A titre d'exemple, des traitements à hautes pressions (homogénéisation à hautes pressions) ou des traitements de cisaillement à hautes vitesses (mélangeur à haute vitesse/broyeur à hélice) répondent à cette fonction.

Quel que soit le traitement retenu, il peut être appliqué soit aux produits, soit à des formules concentrées de teneurs en anéthole et en lécithine plus élevées, qui seront ensuite diluées.

Les traitements dépendent de la formule considérée ; en homogénéisation, les pressions employées peuvent varier de 20 à 150 Mpa (200 à 1500 bars) avec un ou plusieurs cycles ; en traitement de cisaillement, le temps d'application dépend du volume traité.

Selon la composition de la boisson et du type de phospholipide notamment de lécithine, le système paraît plus ou moins sujet à des mécanismes oxydatifs, conduisant à l'apparition de mauvaises notes olfactives ou de mauvais goûts. Ces mécanismes indésirables sont évités/retardés grâce à l'incorporation dans la formule de substances présentant des propriétés antioxydantes. Il peut s'agir de molécules pures ou d'extraits végétaux contenant des principes antioxydants. De nombreuses substances répondent à cette fonction. A titre d'exemple, on peut employer les éléments suivants : tocophérols, palmitate d'ascorbyle, extraits de thé (vert, noir ou autres), extraits de romarin ou de sauge. Les doses employées sont fonction de la concentration en principe actif et de l'efficacité de celui-ci ; de la teneur et de la nature de la lécithine considérée ; de la teneur en alcool, des traitements appliqués à l'émulsion (hautes pressions ...).

L'invention est remarquable en ce que l'émulsion devra présenter un trouble du fait de sa déstabilisation lors de l'ajout d'une solution aqueuse appropriée.

Quelle que soit l'émulsion produite, celle-ci présentera un trouble par dilution, si le diluant est acide.

Par contre, si l'on désire obtenir un trouble immédiat par dilution avec un liquide aqueux non acide, ce qui constitue une variante avantageuse, le diluant devra comprendre un ou plusieurs dications minéraux tels que le magnésium, le calcium, le manganèse.

Dans ce cas, il est souhaitable que la boisson selon l'invention comprenne un ou plusieurs composés qui provoquent et/ou accélèrent la déstabilisation de l'émulsion au moment de la dilution, notamment.

Les composés phénoliques répondent de façon appropriée à cette fonction et l'on peut employer à titre d'exemple : les catéchines, gallocatéchines, tanins, tanins condensés, tanins galliques, ellagitanins et dérivés (esters galliques, dimères, oligomères, théaflavines, théarubigines, catéchine, épicatéchine, épigallocatéchine, gallocatéchine et leurs esters mono et digalloylés...), les stilbènes, les flavonoïdes (phlorétine et dérivés...).

Dans cette optique, on peut employer les molécules pures ou encore un extrait / concentré végétal contenant une ou plusieurs de ces structures (ex. : extraits de feuilles de thé (vert, noir ou oolong), gingko biloba, extraits de fruits : pomme, aubépine, guarana, raisins, sureau ; bois, écorces, racines et noix : tanins de chêne, tanins de noix de galle, tanins gambir, pépins de raisin, racines de rhubarbe de chine, girofle, cannelle, réglisse, cola...).

Dans tous les cas, l'extrait végétal doit être traité avant incorporation dans la formule de façon à éliminer tous les cations divalents, en utilisant une résine échangeuse de cations par exemple.

Un même extrait végétal peut présenter à la fois les propriétés antioxydantes et celles de « catalyseur » de trouble à la dilution (ex. extrait de thé). Dans le cas contraire, plusieurs extraits pourront être associés. Bien que la présence dans la boisson de composé ou d'extrait phénolique soit indispensable à l'apparition du trouble lorsque la dilution est faite à l'eau (ou avec une boisson non acide), ce trouble est lié à l'addition de cations divalents (Ca, Mg, Mn principalement) présents dans le liquide de dilution. Ainsi, une teneur significative en l'un ou/et l'autre de ces dications dans le milieu de dilution est indispensable au mécanisme d'apparition d'un louchissement de la boisson. Ainsi, les eaux particulièrement minéralisées apparaissent favorables au mécanisme.

De ce fait, la boisson selon l'invention ne comprendra essentiellement pas de dications (magnésium, calcium, manganèse) mais par contre, le milieu de dilution en comprendra de préférence. Le terme « essentiellement » signifie que la boisson ne comprendra pas une quantité suffisante de dications pour affecter la limpidité.

De préférence, la boisson comprend par litre :
- 8 g à 400 g d'éthanol, avantageusement 40 à 300 g d'éthanol,
- 0,2 à 10 g d'anéthole
- 1 à 30 g de phospholipides
- eau q.s.p. 1 l, à 20°C
une quantité efficace de substances déstabilisant l'émulsion notamment des composés phénoliques lorsque ladite boisson est diluée avec une eau contenant des cations divalents alimentaires en quantité suffisante, une ou plusieurs substances, antioxydantes, éventuellement du sucre, notamment le saccharose, le fructose, le glucose, le maltose, le lactose.

La mesure est effectuée à 20°C, étant entendu que les proportions varieront de manière connue à une température différente.

L'invention concerne encore les boissons éventuellement alcoolisées troubles, obtenues par dilution d'une boisson selon l'invention notamment avec une eau minéralisée.

Les exemples ci-après illustrent l'invention.

### EXEMPLES

Les boissons des exemples qui suivent sont réalisées soit par traitement haute pression ("Lab 40" d'APV-Gaulin; "Pony" de Westfalia Separator), soit, pour des essais de laboratoire de petit volume, par traitement avec un broyeur/mélangeur à haute vitesse (Ultra-turrax T25 Janke & Kunkel à 24000 tr/min pour des volumes d'environ 10 ml ; Polytron Kinematica à vitesse maximale pour des volumes de l'ordre du litre ; mélangeur Silverson L4RT pour des volumes supérieurs au litre).

Les tailles des gouttelettes d'anéthole ainsi émulsionnées sont mesurées par granulométrie laser (granulomètre "Zetamaster" de Malvern) directement sans dilution de la boisson.

Les lécithines et fractions (d'oeufs et de soja) employées ci-dessous ont été fournies :
par Lucas-Mever :
   Epikuron E145 (à 50% de phosphatidylcholine)
   Epikuron E200E (constituée essentiellement de lysophosphatidylcholine)
   Ovothin 180 (à 80% de phosphatidylcholine)
et par Stern/Nattermann :
   Phospholipon 80 (à 80% de phosphatidylcholine)
   SternpurE (constituée essentiellement de lyso-lécithines).

### Exemple n°1

7,5 g d'anéthole et 10 g Epikuron 145 sont dissous dans 1050 g d'alcool à 96°. Cette solution est ajoutée à de l'eau déminéralisée (q.s.p. 5 I) sous agitation. La pré-émulsion obtenue est soumise à un traitement d'homogénéisation APV-Gaulin : 80 Mpa (800 bars) ; 3 cycles en pression. Cette boisson ne trouble pas lorsqu'elle est diluée par de l'eau ; elle trouble, diluée par une boisson acide, de type tonic, cola ou boisson acide à base de fruits.

### Exemple n°2

15 g d'anéthole et 30 g Phospholipon 80 sont dissous dans 2100 g d'alcool à 96°. Cette solution est ajoutée à de l'eau déminéralisée (q.s.p. 10 I) sous agitation. La pré-émulsion obtenue est soumise à un traitement d'homogénéisation Wesfalia Separator: 1 cycle de 100 Mpa (1000 bars). Le diamètre moyen de cette émulsion est de 10 nm. A titre d'exemple, une turbidité de 15 NTU est mesurée sur ce type de boisson.

Cette boisson se comporte à la dilution comme dans l'exemple n° 1,

### Exemple n°3

7,5 g d'anéthole et 10 g Epikuron 145 sont dissous dans 1050 g d'alcool à 96°. Cette solution est ajoutée sous agitation à de l'eau déminéralisée contenant 1,2 g de catéchines extraites de thé vert décaféiné ou 75 ml d'un extrait hydro-alcoolique de thé noir, sans dications (eau : q.s.p. 5 I). Les extraits de thé jouent alors le rôle d'antioxydant et de catalyseur de trouble. La pré-émulsion obtenue est soumise à un traitement d'homogénéisation APV-Gaulin : 80 Mpa (800 bars) ; 3 cycles en pression. Le diamètre moyen de l'émulsion produite est de 50 nm et apparaît donc relativement bien limpide. Avec les deux types de thé, la boisson trouble lorsqu'elle est diluée par une eau de type "Evian" ou par une boisson acide, de type tonic, cola ou boisson acide à base de fruits.

### Exemple n°4

10 g d'anéthole et 20 g Phospholipon 80 sont dissous dans 1050 g d'alcool à 96°. Cette solution est ajoutée sous agitation à de l'eau déminéralisée contenant 50 ml d'extrait aqueux de thé vert (antioxydant: et catalyseur de trouble), débarrassé de cations divalents, par échange sur résine (eau : q.s.p. 5 l). La pré-émulsion obtenue est soumise à un traitement d'homogénéisation Wesfalia Separator 100 Mpa (1000 bars) ; 2 cycles en pression. Le diamètre moyen obtenu est de 25 nm. La boisson est limpide, légèrement plus "brillante" à l'oeil que dans l'exemple n°3. La turbidité mesurée sur ce produit est inférieure à 50 NTU. Le comportement à la dilution est similaire à celui décrit dans l'exemple n°3.

N.B : Les cations divalents peuvent être éliminés de tout ingrédient entrant dans la composition de la boisson (extrait de thé, romarin, et...) par exemple par traitement sur une colonne échangeuse de cations sous forme H⁺, Na⁺, K⁺.

### Exemple n°5

1,5 g d'anéthole et 3 g Phospholipon 80 sont dissous dans 210 g d'alcool à 96°. Cette solution est ajoutée sous agitation à de l'eau déminéralisée contenant 0,3 g de tanins de noix de Galles ou 0,5 g de tanins de chêne (catalyseur de trouble) et 0,5 g d'extrait aqueux de romarin (antioxydant), débarrassé de cations divalents, par échange sur résine échangeuse d'ions (eau : q.s.p. 1 I). La pré-émulsion obtenue est soumise à un traitement sous Polytron pendant 5 minutes. Cette boisson se comporte à la dilution comme l'exemple n°3,

### Exemple n°6

0,75 g d'anéthole et 1,5 g Phospholipon 80 sont dissous dans 105 g d'alcool à 96°. Cette solution est ajoutée sous agitation à de l'eau déminéralisée contenant 6,25 ml /l de concentré de pommes riches en phénols (catalyseur de trouble), neutralisé à pH =7 (eau: q.s.p. 0,5 l). La pré-émulsion obtenue est soumise à un traitement sous Polytron pendant 2 minutes. La boisson ainsi produite, sans déminéralisation de l'extrait de pomme, n'apparaît pas d'une limpidité impeccable (Turbidité : 200 NTU) du fait de la présence des cations divalents de la pomme. Par dilution, elle trouble dans les mêmes conditions que l'exemple n° 3. Si cette même formule est réalisée dans les mêmes conditions, mais avec un concentré de pommes pauvre en phénols, celle-ci ne présente pas de trouble lors d'une dilution par de l'eau de type "Evian" et, comme les exemples 1 et 2, elle trouble uniquement par l'ajout d'un liquide acide.

Si la boisson est réalisée avec un extrait de pommes riches en phénols et dépourvu de cations divalents, l'émulsion est limpide (Turbidité : 82 NTU) et trouble dans les mêmes conditions que l'exemple n°3.

### Exemple n°7

1,4 g d'anéthole et 2.7 g/l Epikuron 200E sont dissous dans 294 g d'alcool à 96°. Cette solution est ajoutée sous agitation à de l'eau déminéralisée contenant 0.360 g d'extrait aqueux de thé vert (catalyseur de trouble et antioxydant), débarrassé de cations divalents par échange sur résine (eau : q.s.p. 1 l). La pré-émulsion obtenue est soumise à un traitement sous Polytron pendant 5 minutes. La boisson produite est relativement limpide et trouble par dilution dans les mêmes conditions que l'exemple n° 3

### Exemple n°8

1,4 g d'anéthole sont dissous dans 294 g d'alcool à 96°. Cette solution est ajoutée sous agitation à de l'eau déminéralisée contenant 1,3 g Sternpur E et 50 g de saccharose solubilisés (eau : q.s.p. 1 l). La pré-émulsion obtenue est obtenue grâce à un mélangeur Silverson L4RT, à vitesse maximale. La formule est limpide et ne trouble pas lors d'une dilution par de l'eau d'Evian (cf. exemple n° 1).

### Exemple n° 9

0,15 g d'anéthole et 0,8 g Phospholipon sont dissous sans 12,6 g d'alcool à 96°. Cette solution est ajoutée sous agitation à de l'eau déminéralisée contenant 0,12 g de catéchines (catalyseur de trouble et antioxydant) extraites de thé vert exemptes de dications (eau : q.s.p. 0,1 I). La pré-émulsion obtenue est soumise à un traitement Polytron pendant 2 minutes. La boisson ainsi produite est limpide (Turbidité : 60 NTU) et se comporte à la dilution comme l'exemple 3.

### Exemple n° 10

0,1 g d'anéthole et 0,2 g Phospholipon sont dissous dans 4,2 g d'alcool à 96°C. Cette solution est ajoutée sous agitation à de l'eau déminéralisée contenant 2 ml d'extrait de thé vert (catalyseur de trouble et antioxydant) (eau : q.s.p. 0,1 I). La boisson ainsi produite est limpide (Turbidité : 87 NTU) et se comporte à la dilution comme l'exemple 3.

### Exemple n° 11

0,1 g d'anéthole et 0,2 g Phospholipon sont dissous dans 4,2 g d'alcool à 96°. Cette solution est ajoutée sous agitation à de l'eau déminéralisée contenant 2 ml d'extrait de thé vert (catalyseur de trouble et antioxydant) (eau : q.s.p. 0,5 I). La boisson ainsi produite est limpide. Elle se trouble légèrement par dilution, par une eau de type « Evian » ou par une boisson acide de type « tonic, cola... », du fait de sa faible teneur en anéthole.

### Exemple n° 12

37,5 g d'anéthole et 96 g de Phospholipon 80 sont dissous dans 1,050 Kg d'alcool à 96°. Cette solution est ajoutée sous agitation à de l'eau déminéralisée (q.s.p. 5 l). Cette base d'émulsion à 25 % v/v d'alcool concentré 5 fois est soumise à un double traitement d'homogénéisation à 1000B (Wesfalia Separator). Cette émulsion limpide (Turbidité : 25 NTU) présente un diamètre moyen de gouttelettes d'anéthole de 10 nm.

Cette base est utilisée diluée :
- par exemple, 0,2 I de celle-ci à laquelle sont ajoutés 20 ml d'extrait de guarana ou encore de cola exempt de minéraux (facteur de trouble) et 0,2 g d'extrait de romarin débarrassé de cations divalents, par échange sur résine (antioxydant) sont dilués dans un mélange hydro-alcoolique à 25 % d'alcool (q.s.p. 1 I).
- où encore, 1,33 I de base concentrée, 50 ml d'extrait de thé vert (antioxydant et facteur de trouble) et 100 ml d'extrait de réglisse, débarrassé de cations divalents, par échange sur résine sont dilués dans un mélange hydro-alcoolique à 25 % jusqu'à 5 I.

Ces deux formulations se comportent à la dilution comme l'exemple n° 3.

## Revendications

1. Boisson éventuellement alcoolisée contenant de l'anéthole, **caractérisée en ce qu'**elle comprend une quantité efficace d'au moins un phospholipide, acceptable en alimentation humaine, pour améliorer la solubilité apparente de l'anéthole dans ladite boisson.

2. Boisson éventuellement alcoolisée selon la revendication 1, **caractérisée en ce que** le phospholipide est choisi dans le groupe des phospholipides contenus dans les lécithines ou leurs dérivés, notamment les lysolécithines, d'origine végétale ou animale.

3. Boisson éventuellement alcoolisée selon la revendication 2, **caractérisée en ce que** le phospholipide répond à la formule : 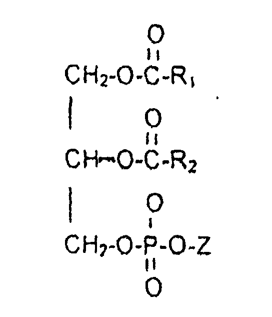 dans laquelle :
R₁, R₂ identiques ou différents sont des restes d'acides gras en C₁₄-C₂₂
Z est l'atome d'hydrogène, un radical 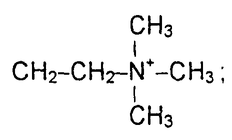 CH₂-CH₂-NH₂,

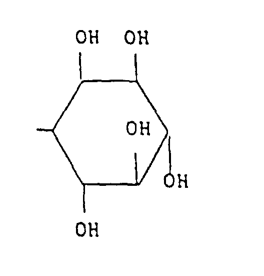

4. Boisson éventuellement alcoolisée selon la revendication 2 **caractérisée en ce que** le phospholipide est choisi dans le groupe constitué par l'acide phosphatidique, la phosphatidylcholine, la phosphatidyléthanolamine, la phosphatidylsérine, le phosphatidylinositol, la lysophosphatidytchloline.

5. Boisson éventuellement alcoolisée selon l'une des revendications 1 à 4, **caractérisée en ce qu'**elle est limpide, notamment présente une turbidité inférieure à 100 NTU.

6. Boisson éventuellement alcoolisée selon l'une des revendications précédentes, **caractérisée en ce qu'**elle comprend 0,2 à 10 g/l d'anéthole, de préférence 0,5 à 2 g/l et 0,4 à 30 g/l de phospholipides.

7. Boisson éventuellement alcoolisée selon la revendication 6, **caractérisée en ce que** le rapport en poids entre le phospholipide et l'anéthole est compris entre 0,5 et 10.

8. Boisson éventuellement alcoolisée selon l'une des revendications précédentes, **caractérisée en ce qu'**elle comprend 8 à 400 g/l d'éthanol, de préférence 40 à 300 g/l d'éthanol.

9. Boisson éventuellement alcoolisée selon l'une des revendications précédentes, **caractérisée en ce qu'**elle est sous la forme d'une émulsion submicronique ou microémulsion composée de nanosomes dont le diamètre moyen est inférieur à 100 nm, du type phase anéthole-phospholipide dans phase aqueuse, éventuellement alcoolisée.

10. Boisson éventuellement alcoolisée selon la revendication 9, **caractérisée en ce que** la microémulsion est obtenue par homogénéisation à haute pression ou par un mélangeur approprié, à haute vitesse.

11. Boisson éventuellement alcoolisée selon l'une des revendications précédentes, **caractérisée en ce qu'**elle comprend une ou plusieurs substances antioxydantes.

12. Boisson éventuellement alcoolisée selon la revendication 11, **caractérisée en ce que** la substance antioxydante est choisie dans le groupe constitué par les tocophérols, le palmitate d'ascorbyle, les extraits de thé, les extraits de romarin, les extraits de sauge.

13. Boisson éventuellement alcoolisée selon l'une des revendications précédentes, **caractérisée en ce qu'**elle se trouble par un liquide acide, notamment tonique, par déstabilisation de la microémulsion.

14. Boisson éventuellement alcoolisée selon l'une des revendications 1 à 12, **caractérisée en ce qu'**elle comprend une quantité efficace d'une ou plusieurs substances qui provoquent la déstabilisation de la microémulsion lorsque la boisson est diluée avec une eau contenant des cations divalents alimentaires en concentration suffisante.

15. Boisson éventuellement alcoolisée selon la revendication 14, **caractérisée en ce que** la substance est choisie dans le groupe constitué par les composés phénoliques.

16. Boisson éventuellement alcoolisée selon la revendication 15, **caractérisée en ce que** le composé phénolique est choisi dans le groupe constitué par les catéchines, gallocatéchines, tanins, tanins condensés, tanins galliques, ellagitanins et dérivés (esters galliques, dimères, oligomères, théaflavines, théarubigines, catéchine, épicatéchine, épigallocatéchine, gallocatéchine et leurs esters mono et digalloylés...), les stilbènes, les flavonoïdes (phlorétine et dérivés...), les extraits de feuilles de thé (vert, noir ou oolong), gingko biloba, les extraits de fruits : pomme, aubépine, guarana, raisins, sureau ; bois, écorces, racines et noix : tanins de chêne, tanins de noix de galle, tanins gambir, pépins de raisin, racines de rhubarbe de chine, girofle, cannelle, réglisse, cola...).

17. Boisson alcoolisée selon l'une des revendications précédentes, **caractérisée en ce qu'**elle est essentiellement exempte de cations divalents, notamment de calcium, magnésium, manganèse.

18. Boisson alcoolisée selon l'une des revendications précédentes, **caractérisée en ce qu'**elle comprend par litre :
- 8 à 400 g d'éthanol, avantageusement 40 à 300 g d'éthanol,
- 0,2 à 10 g d'anéthole
- 0,4 à 30 g de phospholipides
une quantité efficace de substances déstabilisant i'émulsion notamment des composés phénoliques lorsque ladite boisson est diluée avec une eau contenant des cations divalents alimentaires en quantité suffisante, une ou plusieurs substances, antioxydantes, éventuellement du sucre.

19. Boisson trouble éventuellement alcoolisée obtenue par dilution d'une boisson selon l'une des revendications précédentes.

## Patentansprüche

1. Gegebenenfalls alkoholisches Getränk, das Anethol enthält, **dadurch gekennzeichnet, dass** es eine wirksame Menge mindestens eines für die menschliche Ernährung annehmbaren Phospholipids umfasst, um die sichtbare Löslichkeit des Anethols in dem Getränk zu verbessern.

2. Gegebenenfalls alkoholisches Getränk nach Anspruch 1, **dadurch gekennzeichnet, dass** das Phospholipid ausgewählt ist aus der Gruppe von Phospholipiden, die in Lecithinen oder deren Derivaten, insbesondlere Lysolecithinen pflanzlichen oder tierischen Ursprungs enthalten sind.

3. Gegebenenfalls alkoholisches Getränk nach Anspruch 2, **dadurch gekennzeichnet, dass** das Phospholipid der Formel: 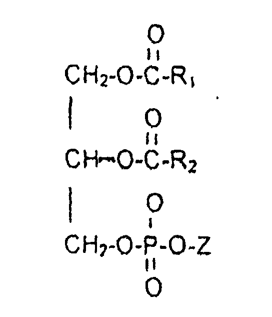 entspricht, in der:
R₁, R₂, identisch oder verschieden, (C₁₄ - C₂₂)-Fettsäurereste sind;
Z ein Wasserstoff-Atom, ein Rest 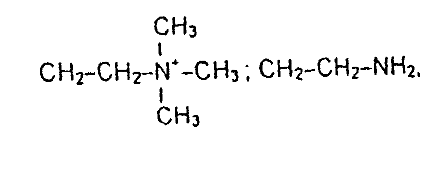 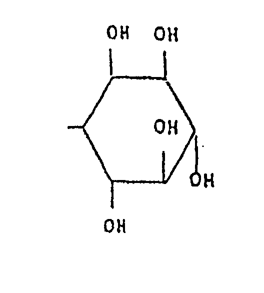 ist.

4. Gegebenenfalls alkoholisches Getränk nach Anspruch 2, **dadurch gekennzeichnet, dass** das Phospholipid ausgewählt ist aus der Gruppe bestehend aus Phosphatidsäure, Phosphatidylcholin, Phosphatidylethanolamin, Phosphatidylserin, Phosphatidylinosit, Lysophosphatidylcholin.

5. Gegebenenfalls alkoholisches Getränk nach einem der Ansprüche 1 bis 4, **dadurch gekennzeichnet, dass** es klar ist, insbesondere eine Trübung unterhalb von 100 NTU aufweist.

6. Gegebenenfalls alkoholisches Getränk nach einem der vorangehenden Ansprüche, **dadurch gekennzeichnet, dass** es 0,2 bis 10 g/l Anethol, vorzugsweise 0,5 bis 2 g/l, und 0,4 bis 30 g/l Phospholipide umfasst.

7. Gegebenenfalls alkoholisches Getränk nach Anspruch 6, **dadurch gekennzeichnet, dass** das Gewichtsverhältnis von Phospholipid und Anethol zwischen 0,5 und 10 einschließlich liegt.

8. Gegebenenfalls alkoholisches Getränk nach einem der vorangehenden Ansprüche, **dadurch gekennzeichnet, dass** es 8 bis 400 g/l Ethanol, vorzugsweise 40 bis 300 g/l Ethanol enthält.

9. Gegebenenfalls alkoholisches Getränk nach einem der vorangehenden Ansprüche, **dadurch gekennzeichnet, dass** es in Form einer submikronischen Emulsion oder Mikroemulsion, die aus Nanosomen zusammengesetzt ist, deren mittlerer Durchmesser unterhalb von 100 nm liegt, der Art Anethol-Phospholipid-Phase in wässriger, gegebenenfalls Alkohol enthaltender Phase vorliegt.

10. Gegebenenfalls alkoholisches Getränk nach Anspruch 9, **dadurch gekennzeichnet, dass** die Mikroemulsion durch Homogenisierung bei hohem Druck oder durch einen geeigneten Mischer mit hoher Geschwindigkeit erhalten wird.

11. Gegebenenfalls alkoholisches Getränk nach einem der vorangehenden Ansprüche, **dadurch gekennzeichnet, dass** es eine oder mehrere Antioxidans-Substanzen enthält.

12. Gegebenenfalls alkoholisches Getränk nach Anspruch 11, **dadurch gekennzeichnet, dass** die Antioxidans-Substanz ausgewählt ist aus der Gruppe bestehend aus Tocopherolen, Ascorbylpalmitat, Tee-Extrakten, Rosmarin-Extrakten, Salbei-Extrakten.

13. Gegebenenfalls alkoholisches Getränk nach einem der vorangehenden Ansprüche, **dadurch gekennzeichnet, dass** es sich durch eine saure, Insbesondere tonische Flüssigkeit durch Destabilisierung der Mikroemulsion trübt.

14. Gegebenenfalls alkoholisches Getränk nach einem der Ansprüche 1 bis 12, **dadurch gekennzeichnet, dass** es eine wirksame Menge einer oder mehrerer Substanzen umfasst, welche die Destabilisierung der Mikroemulsion hervorrufen, wenn das Getränk mit Wasser verdünnt wird, das zweiwertige Nahrungsmittel-Kationen in ausreichender Konzentration enthält.

15. Gegebenenfalls alkoholisches Getränk nach Anspruch 14, **dadurch gekennzeichnet, dass** die Substanz ausgewählt ist aus der Gruppe, die aus phenolischen Verbindungen besteht.

16. Gegebenenfalls alkoholisches Getränk nach Anspruch 15, **dadurch gekennzeichnet, dass** die phenolische Verbindung ausgewählt ist aus der Gruppe bestehend aus Catechinen, Gallocatechinen, Tanninen, kondensierten Tanninen, Gallotanninen, Ellagitanninen und Derivaten (Gallussäureestern, Dimeren, Oligomeren, Theaflavinen, Thearubiginen, Catechin, Epicatechin, Epigallocatechin, Galiocatechin und deren Mono- und Digalloylestern ...), Stilbenen, Flavonoiden (Phloretin und Derivaten ...), Extrakten von Teeblättern (grün, schwarz oder oolong), Gingko biloba, Extrakten von Früchten: Apfel, Hagedorn, Guarana, Trauben, Holunder; Holz, Rinden, Wurzeln und Nuss: Eichentanninen, Gallapfeltanninen, Gambirtanninen, Traubenkernen, Wurzeln von chinesischem Rhabarber, Gewürznelke, Zimt, Süßholzstrauch, Cola ...).

17. Alkoholisches Getränk nach einem der vorangehenden Ansprüche, **dadurch gekennzeichnet, dass** es im Wesentlichen frei von zweiwertigen Kationen, insbesondere Calcium, Magnesium, Mangan ist.

18. Alkoholisches Getränk nach einem der vorangehenden Ansprüche, dadurch gegenzeichnet, dass es pro Liter umfasst:
- 8 bis 400 g Ethanol, vorteilhaft 40 bis 300 g Ethanol,
- 0,2 bis 10 g Anethol,
- 0,4 bis 30 g Phospholipide,
eine wirksame Menge an Substanzen, welche die Emulsion destabilisieren, insbesondere phenolischen Verbindungen, wenn das Getränk mit Wasser verdünnt wird, das zweiwertige Nahrungsmittel-Kationen in ausreichender Menge enthält, eine oder mehrere Antioxidans-Substanzen, gegebenenfalls Zucker.

19. Trübes, gegebenenfalls alkoholisches Getränk, das durch Verdünnung eines Getränks gemäß einem der vorangehenden Ansprüche erhalten wird.

## Claims

1. Alcoholic or non-alcoholic beverage containing anethol, **characterized in that** it comprises an effective amount of at least one phospholipid, acceptable in human food, in order to improve the apparent solubility of the anethol in the said beverage.

2. Alcoholic or non-alcoholic beverage according to Claim 1, **characterized in that** the phospholipid is selected from the group of phospholipids present in lecithins or derivatives thereof, especially lysolecithins, of vegetable or animal origin.

3. Alcoholic or non-alcoholic beverage according to Claim 2, **characterized in that** the phospholipid corresponds to the formula: 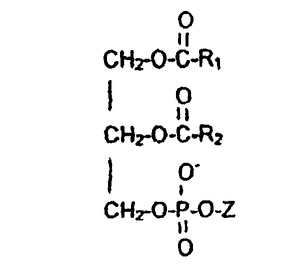 in which:
R₁ and R₂ are identical or different and are C₁₄-C₂₂ fatty acid radicals,
Z is the hydrogen atom or a radical

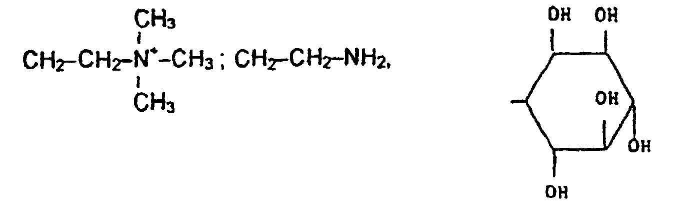

4. Alcoholic or non-alcoholic beverage according to Claim 2, **characterized in that** the phospholipid is selected from the group consisting of phosphatidic acid, phosphatidylcholine, phosphatidylethanolamine, phosphatidylserine, phosphatidylinositol, lysophosphatidylcholine.

5. Alcoholic or non-alcoholic beverage according to one of Claims 1 to 4, **characterized in that** it is clear, having in particular a turbidity of less than 100 NTU.

6. Alcoholic or non-alcoholic beverage according to one of the preceding claims, **characterized in that** it contains from 0.2 to 10 g/l of anethol, preferably from 0.5 to 2 g/l and from 0.4 to 30 g/l of phospholipids.

7. Alcoholic or non-alcoholic beverage according to Claim 6, **characterized in that** the ratio by weight between the phospholipid and the anethol is between 0.5 and 10.

8. Alcoholic or non-alcoholic beverage according to one of the preceding claims, **characterized in that** it contains from 8 to 400 g/l of ethanol, preferably from 40 to 300 g/l of ethanol.

9. Alcoholic or non-alcoholic beverage according to one of the preceding claims, **characterized in that** it is in the form of a submicron emulsion, or microemulsion, composed of nanosomes whose average diameter is less than 100 nm, of the type comprising anethol-phospholipid phase in aqueous, alcoholic or non-alcoholic phase.

10. Alcoholic or non-alcoholic beverage according to Claim 9, **characterized in that** the microemulsion is obtained by high-pressure homogenization or by an appropriate mixer at high speed.

11. Alcoholic or non-alcoholic beverage according to one of the preceding claims, **characterized in that** it comprises one or more antioxidant substances.

12. Alcoholic or non-alcoholic beverage according to Claim 11, **characterized in that** the antioxidant substance is selected from the group consisting of tocopherols, ascorbyl palmitate, tea extracts, rosemary extracts and sage extracts.

13. Alcoholic or non-alcoholic beverage according to one of the preceding claims, **characterized in that** it becomes cloudy with an acidic liquid, especially a tonic, by destabilization of the microemulsion.

14. Alcoholic or non-alcoholic beverage according to one of Claims 1 to 12, **characterized in that** it comprises an effective amount of one or more substances which bring about the destabilization of the microemulsion when the beverage is diluted with water containing a sufficient concentration of divalent food cations.

15. Alcoholic or non-alcoholic beverage according to Claim 14, **characterized in that** the substance is selected from the group consisting of phenolic compounds.

16. Alcoholic or non-alcoholic beverage according to Claim 15, **characterized in that** the phenolic compound is selected from the group consisting of catechins, gallocatechins, tannins, condensed tannins, gallic tannins, ellagitannins and derivatives (gallic esters, dimers, oligomers, theaflavins, thearubigins, catechin, epicatechin, epigallocatechin, gallocatechin and their mono- and digalloyl esters, etc.), stilbenes, flavonoids (phloretin and derivatives, etc.), tea leaf extracts (green, black or oolong), ginkgo biloba, fruit extracts: apple, aubepine, guarana, grape, elder; wood, bark, peel, roots and nuts: oak tannins, oak-apple tannins, gambir tannins, grape seeds, Chinese rhubarb roots, clove, cinnamon, licorice, cola, etc.).

17. Alcoholic beverage according to one of the preceding claims, **characterized in that** it is essentially free of divalent cations, especially calcium, magnesium and manganese.

18. Alcoholic beverage according to one of the preceding claims, **characterized in that** it comprises per litre:
- from 8 to 400 g of ethanol, advantageously from 40 to 300 g of ethanol,
- from 0.2 to 10 g of anethol
- from 0.4 to 30 g of phospholipids
an effective amount of substances which destabilize the emulsion, especially phenolic compounds, when the said beverage is diluted with water containing a sufficient amount of the divalent food cations, one or more antioxidant substances, optionally sugar.

19. Alcoholic or non-alcoholic cloudy beverage obtained by diluting a beverage according to one of the preceding claims.
